# EUROPEAN PATENT SPECIFICATION

(11) **EP 3 540 216 B1**
(45) Date of publication and mention of the grant of the patent: **28.07.2021**
(21) Application number: 18882291.0
(22) Date of filing: 19.06.2018
(51) Int. Cl.: F03D 13/20, B23P 15/00, F03D 80/00, E04H 12/08

(54) **METHOD FOR MANUFACTURING TOWER BARREL SECTION, TOWER BARREL SECTION AND WIND POWER GENERATOR UNIT**
VERFAHREN ZUR HERSTELLUNG EINES TURMKÖRPERABSCHNITTS, TURMKÖRPERABSCHNITT UND WINDENERGIEGENERATOREINHEIT
L'INVENTION CONCERNE UN PROCÉDÉ DE FABRICATION D'UNE SECTION DE FÛT DE TOUR, UNE SECTION DE FÛT DE TOUR ET UNE UNITÉ DE GÉNÉRATEUR À ÉNERGIE ÉOLIENNE

(30) Priority: 29.12.2017 CN 201711470055
(43) Date of publication of application: 18.09.2019
(73) Proprietor: Xinjiang Goldwind Science & Technology Co. Ltd., Xinjiang 830026 (CN)
(72) Inventor: ZHANG, Ziping, Beijing 100176 (CN); WANG, Yang, Beijing 100176 (CN); XU, Yong, Beijing 100176 (CN)
(74) Representative: Hoffmann Eitle
(86) International application number: PCT/CN2018/091803
(87) International publication number: WO 2019/128141

(56) References cited:
- EP-A1- 2 840 259
- EP-A1- 2 840 259
- EP-A1- 3 184 812
- WO-A1-2006/050723
- WO-A1-2015/161858
- WO-A1-2015/169968
- WO-A1-2015/169968
- CN-A- 101 057 074
- CN-A- 108 000 076
- CN-U- 205 805 835
- CN-U- 205 805 835

## Description

### FIELD

The present disclosure relates to the technical field of wind turbine generator system, and in particular to a method for manufacturing tower tube section, a tower tube section and a wind turbine generator system.

### BACKGROUND

Wind turbine generator system is for converting kinetic energy of the wind into electrical energy. The wind turbine generator system includes a tower and a wind turbine installed on a top of the tower.

To facilitate workers entering the interior of the tower, a door opening is provided on the tower and is locally strengthened by using a door frame. The conventional door frame has an arc shape. A T-type welded seam is formed between the tower and the door frame, which results in a large stress concentration therebetween. In addition, the conventional door design may result in a large thickness for the tower tube section where the door frame located and may increase the total weight of the tower tube section, thereby increasing a manufacturing cost and installing cost for the tower.

CN 205805835 U relates to a connection structure of a tower barrel and a door frame, the tower barrel includes a door frame barrel section for installing the door frame, the door frame barrel section has a hole for installing the door frame, the shape of the door frame and the shape of the hole are consistent, characterized in that the door frame barrel section extends along a part or the entire circumference of the circumference, and the door frame as a whole is a sheet shape extending along the arc in the lateral direction, and at the same vertical height, the arc and the circumference overlaps; the door frame includes a door frame body and a connection portion of the barrel section, the thickness of the barrel joint connection portion is the same as the thickness of the the door frame barrel section, and the thickness of the door frame body is greater than the thickness of the connection portion of the barrel section.

WO 2015/161858 A1 is direct to a method of manufacturing a plurality of elongate tower segments for forming a wind turbine tower section, the tower section constructed by connecting the plurality of tower segments along their respective longitudinal edges, the method comprising the steps of: forming each of a plurality of cans by rolling a metal sheet into a tube having a longitudinal seam formed by welding first and second opposed edges of the rolled sheet, wherein at least some of the welded seams comprise tack welds; forming the tower section by connecting the plurality of cans end to end; and cutting along two or more cut lines extending along the length of the tower section to divide the tower section into a plurality of elongate tower segments, wherein the step of cutting along two or more cut lines comprises cutting along the longitudinal seams through the tack welds.

However, the prior art in said cited documents cannot facilitate a welding process.

### SUMMARY

The objective of the present disclosure is to provide a method for manufacturing tower tube section, a tower tube section and a wind turbine generator system, where the tower tube section has a door frame, which can facilitate a welding process and can effectively reduce a stress concentration.

According to an aspect of the present disclosure, a method according to appended claim 1 for manufacturing tower tube section is provided.

According to another aspect of the present disclosure, a tower tube section according to appended claim 7 is provided.

According to another aspect of the present disclosure, a wind turbine generator system according to appended claim 12 is provided.

According to the present disclosure, a circular degree of the first tubular section and the second tubular section can be ensured. The door frame can be manufactured more easily, and is more easily to be welded to the first tubular section and the second tubular section adjacent thereto. In this manner, the stress concentration of the welded seam during the welding can be reduced effectively, so that deformation may be reduced and the circular degree may be ensured. In addition, the door frame can be easily aligned to the first tubular section and the second tubular section.

Moreover, the door frame manufactured according to the present disclosure is of a higher precision, has a smaller residual stress and is less likely to be deformed. The production efficiency can be improved with less waste materials. The cutting process is simple and is of a high cutting quality.

### BRIEF DESCRIPTION OF THE DRAWINGS

The above-mentioned and other objectives, features and advantages of the present disclosure may become apparent from the detailed description illustrated in conjunction with drawings hereinafter.
Figure 1 illustrates a perspective view of a tower tube section according to an embodiment of the present disclosure.
Figure 2 illustrates an exploded view of the tower tube section shown in Figure 1.
Figure 3 illustrates a plan view of the tower tube section shown in Figure 1.
Figure 4 illustrates a cross-sectional view taken along line A-A shown in Figure 3.
Figure 5 illustrates a schematic diagram of a portion P shown in Figure 4.
Figure 6 illustrates a plan view of a tower tube section according to another embodiment of the present disclosure.
Figure 7 is a flowchart illustrating a manufacturing process of a tower tube section according to an embodiment of the present disclosure.
Figure 8 illustrates a schematic diagram of joining a first tubular section with a second tubular section.
Figure 9 illustrates a schematic diagram of forming openings on a first tubular section and a second tubular section;
Figure 10 illustrates a schematic diagram of a first tube for forming door frames.
Figure 11 illustrates a schematic diagram of cutting the first tube to form multiple door frames.
Figure 12 illustrates a schematic diagram of a third tube for forming door frames.
Figure 13 illustrates a schematic diagram of cutting a second tube to form multiple door frames.
Figure 14 illustrates a schematic diagram of a door frame according to an embodiment of the present disclosure.
Figure 15 is a schematic diagram of installing a door frame to the opening formed by the first tubular section and the second tubular section.
Figure 16 is a schematic diagram of providing a door opening to a door frame.
Figure 17 and 18 are schematic diagrams illustrating angular deformations on a door frame according to the conventional technology.
Figure 19 illustrates a schematic diagram illustrating that there is no angular deformation on the door frame according to embodiments of the present disclosure.

### DETAILED DESCRIPTION

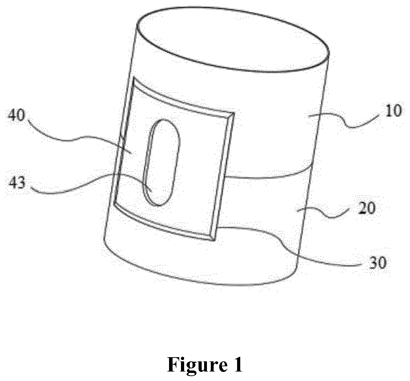

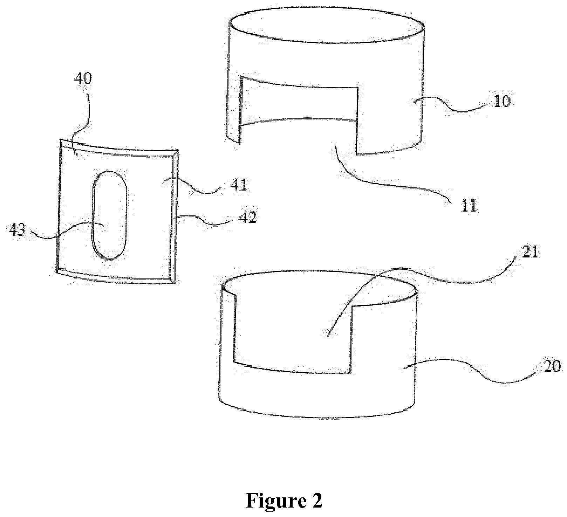

Referring to Figures 1 to 16, a method for manufacturing tower tube section, a tower tube section and a wind turbine generator system according to embodiments of the present disclosure are described hereinafter.

A tower tube section according to an embodiment of the present disclosure is described with reference to Figures 1 to 6.

As shown in Figures 1 to 6, a tower tube section according to the embodiment of the present disclosure includes a first tubular section 10, a second tubular section 20, an opening 30 and a door frame 40. The first tubular section includes a first notch 11, where a height of the first notch 11 is less than a height of the first tubular section 10. The second tubular section 20 is joined to the first tubular section 10, where the second tubular section 20 includes a second notch 21, and a height of the second notch 21 is less than a height of the second tubular section 20. The opening 30 is formed by the first notch 11 and the second notch 21 together. The door frame 40 is embedded in the opening 30 and is welded to the first tubular section 10 and the second tubular section 20, a door opening 43 is provided to the door frame 40.

Referring to Figure 1, the first tubular section 10 and the second tubular section 20 may be formed by steel plates, which may be rolled to be tubular. Ends of the first tubular section 10 and the second tubular section 20 may be aligned with each other, and may be joined to each other by welding.

Referring to Figure 1 to 3, the first tubular section 10 and the second tubular section 20 are both cylindrical, and diameters of the first tubular section 10 and the second tubular section 20 may be equal to each other. The tower tube section, which is formed by the first tubular section 10 and the second tubular section 20, may be a part of a cylindrical tower tube. However, the present disclosure is not limited thereto. The first tubular section 10 and the second tubular section 20 may also be of a truncated cone shape, that is, diameters of the first tubular section 10 and the second tubular section 20 may be gradually changed. The tower tube section formed by the first tubular section 10 and the second tubular section 20 may form a part of a conical tower tube.

In addition, the height of the first tubular section 10 and the height of the second tubular section 20 may be equal or not equal to each other, which is not particularly limited herein.

The first notch 11 may be formed on the first tubular section 10 and the second notch 21 may be formed on the second tubular section 20. The first notch 11 and the second notch 21 may form an opening 30. The height of the first notch 11 is less than the height of the first tubular section 10, and the height of the second notch 21 is less than the height of the second tubular section 20. In this manner, the first tubular section 10 and the second tubular section 20 may form a 360-degrees ring.

In a case that the height of the first notch is equal to the height of the first tubular section and the height of the second notch is equal to the height of the second tubular section, the first tubular section and the second tubular section may form a ring having an angle less than 360 degrees. Thus, the re-rounding process cannot be performed in the process of forming the first tubular section and the second tubular section, and may only be performed together with the door frame after the door frame is welded. In conventional art, it is hard to perform the re-rounding process on both the tubular sections and the door frame together, since a thickness of the door frame is generally greater than a thickness of the tubular sections. According to the present disclosure, the re-rounding process may be performed on the first tubular section 10 and the second tubular section 20 in the process of forming the first tubular section 10 and the second tubular section 20, since a 360-degrees ring is formed by the first tubular section 10 and the second tubular section 20. A circular degree of the first tubular section 10 and the second tubular section 20 can thereby be ensured.

In addition, the height of the first notch 11 and the height of the second notch 22 may be equal or not equal to each other, which are not particularly limited.

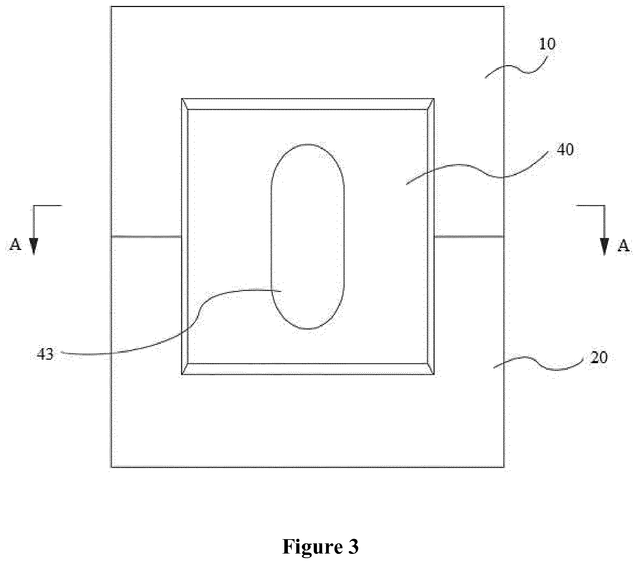

According to the present disclosure, the door frame 40 may be embedded in the opening 30 and may be welded to the first tubular section 10 and the second tubular section 20. A door opening 43 is provided to the door frame 40 to facilitate workers entering the interior of the tower. According to the present disclosure, the door frame 40 may be formed by a steel plate. As shown in Figure 3, the door opening 43 may be obround or elliptical.

As shown in Figure 1, the first tubular section 10 and the second tubular section 20 form a cylinder. The door frame 40 may have two straight edges along a generatrix direction of the cylinder and two arc edges along a circumferential direction of the cylinder, where the two arc edges are matched with a radian of the cylinder and can form a 360-degrees ring together with the cylinder formed by the tubular sections. Referring to Figure 3, the door frame 40 may be rectangular as viewed from a plan view in a case where the first tubular section 10 and the second tubular section 20 form a cylinder. **Therefore, "the door frame 40 may be rectangular" refers to the door frame** 40 is rectangular in shape as viewed from the plan view.

It should be understood that the door frame 40 may be trapezoidal as viewed from a plan view in a case where the first tubular section 10 and the second tubular section 20 form a truncated cone. That is, the door frame 40 may have two straight edges along a generatrix direction of the truncated cone and two arc edges along a circumferential direction of the truncated cone, where the two arc edges are matched with a radian of the truncated cone and can form a 360-degrees ring together with the truncated cone formed by the tubular sections. **Therefore, "the door frame 40 may be trapezoidal" refers to the door frame 40 is trapezoidal** in shape as viewed from the plan view.

According to the present disclosure, the door frame 40 is more easily to be formed, and is more easily welded to the first tubular section 10 and the second tubular section 20 adjacent thereto in the case where the door frame 40 is rectangular or trapezoidal, thereby ensuring a welding quality. On contrary, the process for forming an arc door frame is complex in a case that the door frame is arc-shape as viewed from a plan view, so that it is difficult to ensure a manufacturing precision. Moreover, a welded seam formed between the door frame and the adjacent tubular sections is a spatial curve. It is difficult for the alignment and performing such a welding, which results in a low welding quality.

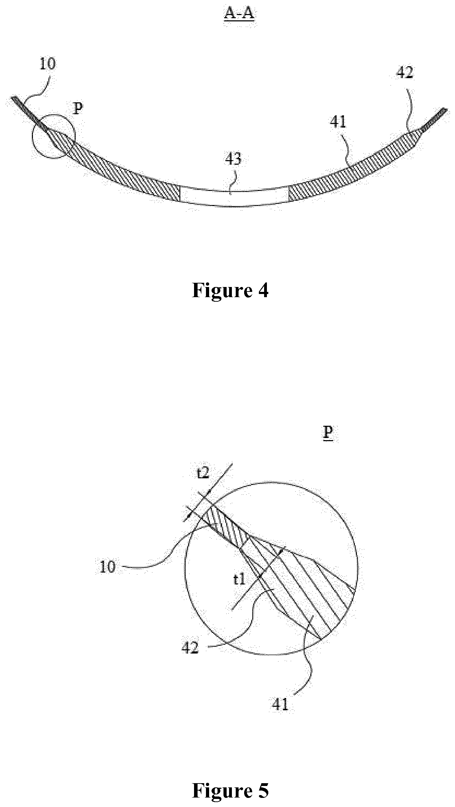

Referring to Figures 4 and 5, a thickness of the door frame 40 is greater than a thickness of the first tubular section 10 and a thickness of the second tubular section 20. An outer side of the door frame 40 is protruded from an outer wall of the first tubular section 10 and an outer wall of the second tubular section 20. An inner side of the door frame 40 is protruded from an inner wall of the first tubular section 10 and an inner wall of the second tubular section 20. A bearing capacity for buckling and fatigue of the tower tube around the door frame 40 may be effectively improved by thickening the door frame 40.

Referring to Figures 4 and 5 which illustrate an embodiment of the present disclosure, the door frame 40 includes a body of the door frame 41 and a joint section 42 formed on an outer periphery (for example, four edges of the door frame 40) of the body of the door frame 41. Referring to Figure 5, a thickness of the joint section 42 is less than a thickness of the body of the door frame 41 and is greater than a thickness t2 of the first tubular section 10 and the second tubular section 20. In addition, the joint section 42 may be thinned uniformly along a circumferential direction of the tower tube section. A minimum thickness t1 of a portion of the joint section 42 which contacts with the first tubular section 10 is still greater than the thickness t2 of the first tubular section 10 and the second tubular section 20.

According to the present disclosure, a smooth transition among the door frame 40, the first tubular section 10 and the second tubular section 20 may be achieved by forming the joint section 42 and thinning the joint section 42 along a circumferential direction of the tower tube section, when compared with a case in which the joint section 42 is not formed. The door frame can be welded to the first tubular section and the second tubular section more easily, and a stress concentration coefficient of the welded seam during the welding can be reduced effectively. A deformation can be reduced and a circular degree can be ensured. In addition, according to the present disclosure, a minimum thickness t1 of the joint section 42 is greater than the thickness t2 of the first tubular section 10 and the second tubular section 20. In such case, it is easier to for alignment in the process of welding the door frame 40 to the first tubular section 10 and the second tubular section 20 when compared with a case in which the minimum thickness t1 of the joint section 42 is equal to the thickness t2 of the first tubular section 10 and the second tubular section 20, thereby ensuring a welding quality.

In addition, according to the present disclosure, the door frame may either be a one-piece structure or be formed by joining two or more door frame sections along an axis of the tower tube section.

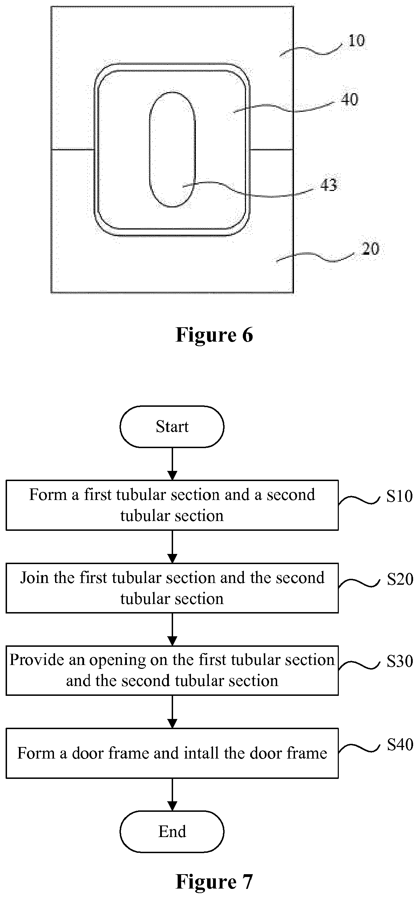

Figure 6 illustrates a plan view of a tower tube section according to another embodiment of the present disclosure. Referring to Figure 6, a fillet transition is formed between two adjacent edges of the door frame to facilitate a smooth transition of the welded seam. In such a manner, the convenience and operability of the welding procedure may be ensured.

It should be understand that the exemplary embodiments in which one opening 30 is provided to the first tubular section 10 and the second tubular section 20 are shown in Figures 1 to 6, the present disclosure is not limited thereto. Multiple openings 30 may be formed on the first tubular section 10 and the second tubular section 20 and multiple door frames 40 may be embedded in the openings 30 (that is, multiple first notches 11 may be formed on the first tubular section 10 and multiple second notches 21 may be formed on the second tubular section 20, and multiple openings 30 are formed by the multiple first notches 11 together with the multiple second notches 21). For example, a second opening may be formed on an opposite side of the opening 30 shown in Figure 1, and another door frame 40 may be installed in the second opening.

According to another embodiment of the present disclosure, a method for manufacturing tower tube section is provided, which is described hereinafter with references to Figures 7 to 16. For simplicity, descriptions which are similar to the description of the above-mentioned tower tube section are omitted.

According to an embodiment of the present disclosure, the method for manufacturing tower tube section may include steps S10 to S40. In step S10, a first tubular section 10 and a second tubular section 20 are formed. In step S20, the first tubular section 10 and the second tubular section 20 are joined together. In step S30, a first notch 11 is formed on the first tubular section 10 and a second notch 21 is formed on the second tubular section 20, where an opening 30 is formed by the first notch 11 and the second notch 21, where a height of the first notch 11 is less than a height of the first tubular section 10, and a height of the second notch 21 is less than a height of the second tubular section 20. In step S40, a door frame 40 is formed, where the door frame 40 is embedded in the opening 30 and is welded to the first tubular section 10 and the second tubular section 20, and a door opening 43 is provided to the door frame 40.

In step S10, the first tubular section 10 and the second tubular section 20 may be formed firstly. The first tubular section 10 and the second tubular section 20 may be formed by rolling steel plates to form tubes using a rolling machine, and a re-rounding process is then performed on the tubes. The first tubular section 10 and the second tubular section 20 may also be formed to be cylindrical or of a truncated cone shape.

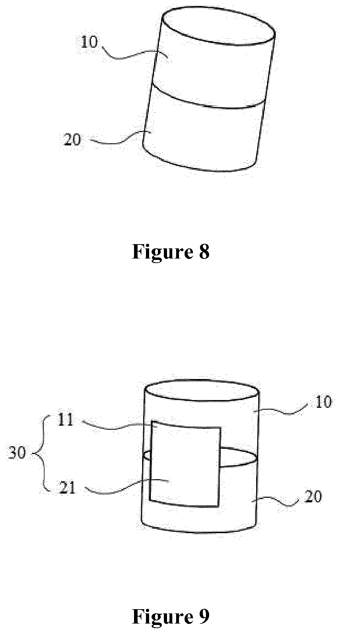

In step S20 which is shown in Figure 8, the first tubular section 10 and the second tubular section 20 may be joined together, for example, by welding.

In step S30 which is shown in Figure 9, the opening 30 may be provided to the first tubular section 10 and the second tubular section 20. The opening 30 may be provided to the first tubular section 10 and the second tubular section 20 according to an outline dimension of the door frame 40 which is to be installed. The opening 30 may include the first notch 11 provided to the first tubular section 10 and the second notch 21 provided to the second tubular section 20. The height of the first notch 11 is less than the height of the first tubular section 10, and the height of the second notch 21 is less than the height of the second tubular section 20.

In a case that the height of the first notch is equal to the height of the first tubular section and the height of the second notch is equal to the height of the second tubular section, the first tubular section and the second tubular section may form a ring having an angle less than 360 degrees. Thus, the re-rounding process cannot be performed in the process of forming the first tubular section and the second tubular section, and may only be performed together with the door frame after the door frame is welded. In conventional art, it is hard to perform the re-rounding process together on the tubular section and the door frame, since a thickness of the door frame is generally greater than a thickness of the tubular section. According to the present disclosure, the re-rounding process may be performed on the first tubular section 10 and the second tubular section 20 in the process of forming the first tubular section 10 and the second tubular section 20, since a 360-degrees ring is formed by the first tubular section 10 and the second tubular section 20. A circular degree of the first tubular section 10 and the second tubular section 20 can be thereby ensured.

According to the present disclosure, the steel plate around the opening 30 may be polished and beveled to facilitate the welding of the door frame 40.

In step S40, the door frame 40 is formed and is installed into the opening 30.

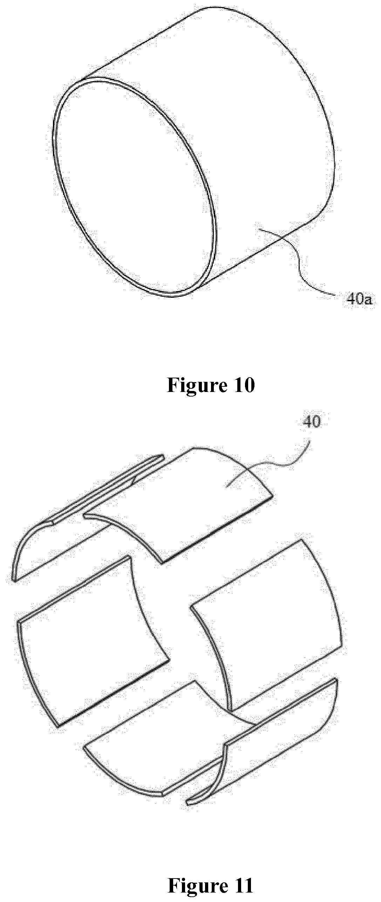

Figures 10 and 11 illustrate an embodiment of a manufacturing method in which a height of the door frame does not exceed a length of a rolling plate of a rolling machine. Referring to Figures 10 and 11, a steel plate is rolled to form a first tube 40a. A re-rounding process is then performed on the first tube 40a. The first tube 40a is cut, according to a dimension of the door frame 40 which is to be formed, to form at least one door frame 40.

For a case in which an arc door frame is formed by rolling a steel plate directly, a dimension of a steel plate for cutting should be greater than the dimension of the door frame, so that a shape of the door frame may be ensured as designed. The door frame of a final dimension is acquired by cutting away excess steel plate, results in wasting of materials and a higher cost. In addition, a re-rounding process cannot be performed in this case, thus the arc door frame may easily be rebounded and deformed. In contrast, according to the present disclosure, the first tube 40a is formed by rolling a steel plate, and multiple arc door frames are formed by cutting the first tube 40a. Compared with the case in which the door frame is formed by directly rolling the steel plate, the door frame manufactured according to the present disclosure is of a higher precision, has a smaller residual stress and is less likely to be deformed. The production efficiency can be improved with less waste materials. The cutting process is simple and is of a high cutting quality.

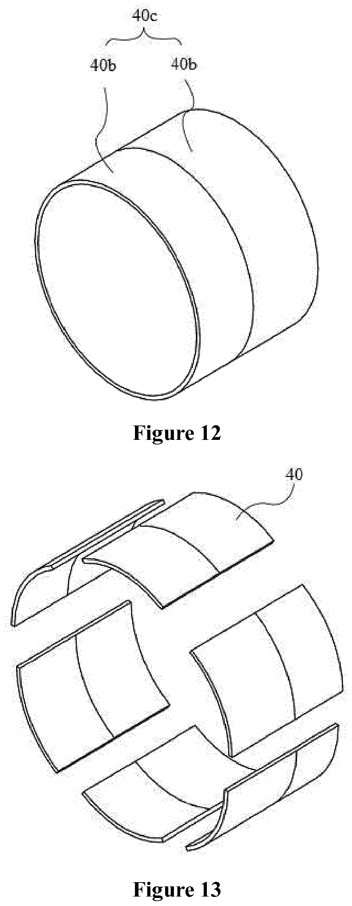

Figures 12 and 13 illustrate an embodiment of a manufacturing method in which a height of the door frame exceeds a length of a rolling plate of a rolling machine. Two steel plates may be rolled to form two second tubes 40b respectively. A re-rounding process is then performed on the two second tubes 40b respectively. The two second tubes 40b are welded together to form a third tube 40c. Finally, the third tube 40c may be cut, according to a dimension of the door frame 40 which is to be formed, to form at least one door frame 40.

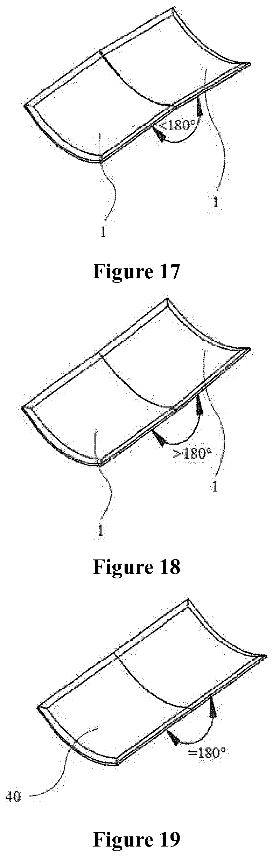

The door frame manufactured according to this method may also have the above-mentioned advantages. In contrast, a large amount of heat may be generated in a welding process at a location where two arc door frames contact with each other in a case where the door frame is formed by forming two arc door frames and then welding the two arc door frames directly. A welded seam shrinkage may be occurred in a cooling process, which may induce angular deformation, which is hard to be corrected, to the two arc door frames. Figures 17 and 18 illustrate angular deformations are induced in a case where two arc door frames 1 are welded directly. In a case where the angular deformation occurs, an angle between the two arc door frames 1 may be smaller than 180 degrees (Figure 17) or be greater than 180 degrees (Figure 18), rather than be equal to 180 degrees. According to the present disclosure, the two second tubes 40b are welded together to form a third tube 40c, and then the third tube 40c is cut to form the door frame 40. A small and controllable welding deformation is induced to the two tubes in this welding process when compared with the case in which two arc door frames 1 are welded directly. No additional deformation control is required. The welding may be performed automatically and with high efficiency. According to the present disclosure, the angle between multiple door frames is equal to 180 degrees when the door frame is formed by joining the multiple door frames (shown in Figure 19).

In addition, it should be understood that Figures 10 to 13 illustrate a method for forming the door frame 40, in which the first tubular section 10 and the second tubular section 20 are cylindrical, and the door frame 40 is rectangular in shape as viewed from a plan view. In this case, the first tube 40a and the second tube 40b may be manufactured to be cylindrical. Alternatively, when the first tubular section 10 and the second tubular section 20 are of a truncated cone shape, the door frame 40 is trapezoidal as viewed from a plan view, the first tube 40a and the second tube 40b may be rolled to be of the truncated cone shape.

According to the invention, the forming the door frame 40 further includes forming a joint section 42 on a periphery (for example, four edges of the door frame 40) of a body 41 of the door frame 40 after the door frame 40 is formed. For example, the joint section 42 may be formed by polishing. The specific structure of the joint section 42 is described in detail in the description of the above tower tube section, and is omitted herein. After the joint section 42 is formed, the edges of the door frame 40 may be reveled to facilitate the welding.

According to the embodiment of the present disclosure, a fillet transition is formed between two adjacent edges of the door frame, as shown in Figure 6, to facilitate a smooth transition of the welded seam. In such a manner, a smooth transition is provided to the welded seam, and the convenience and operability of the welding procedure may be ensured.

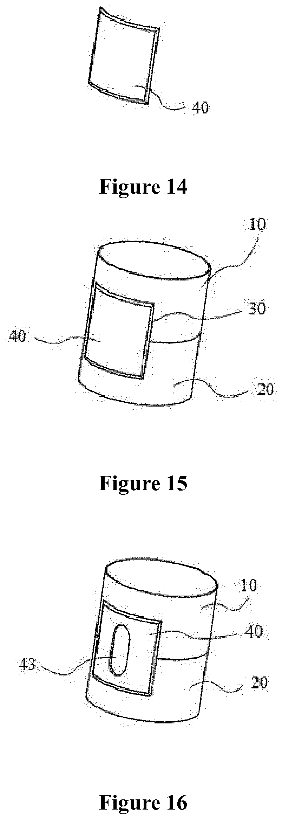

Referring to Figure 15, the door frame 40 formed in Figure 14 may be embedded in an opening 30 and be welded to the first tubular section 10 and the second tubular section 20. After the welding, the welded seam is polished to achieve a smooth transition among the door frame 40, the first tubular section 10 and the second tubular section 20. Finally, a door opening 43 is provided to on the door frame 40 to form a final tower tube section.

It should be understood that, the method for manufacturing the tower tube section described above is in steps of sequence, but the method for manufacturing the tower tube section is not limited to the sequence of the above-described steps, unless an obvious sequential relationship is presented.

According to the present disclosure, a re-rounding process can be performed on the first tubular section and the second tubular section during the process of forming the first tubular section and the second tubular section, since the first tubular section and the second tubular section form a 360-degrees ring. A circular degree of the first tubular section and the second tubular section can thereby be ensured. In addition, according to the present disclosure, since the door frame is rectangular or trapezoidal from a plan view, the door frame is more easily to be formed, and is more easily welded to the first tubular section and second tubular section adjacent thereto, thereby ensuring a welding quality.

According to the present disclosure, a smooth transition among the door frame, the first tubular section and the second tubular section may be achieved by forming the joint section. When compared with a case in which the joint section is not formed, the door frame can be welded to the first tubular section and the second tubular section more easily. A stress concentration coefficient of the welded seam during the welding may be reduced effectively. A deformation may be reduced and a circular degree may be ensured. In such case, it is easier for alignment in the process of welding the door frame to the first tubular section and the second tubular section, thereby ensuring a welding quality.

According to the present disclosure, a tube is formed by rolling a steel plate, and multiple arc door frames are formed by cutting the tube. Compared with a case in which the door frame is formed by directly rolling the steel plate, the door frame manufactured according to the present disclosure is of a higher precision, has a smaller residual stress and is less likely to be deformed. The production efficiency can be improved with less material waste, and the cutting process is simple and is of a high cutting quality. In addition, two tubes are welded together and then being cut to form the door frame. A small and controllable welding deformation is induced to the two tubes in this welding process when compared with a case in which two arc door frames are welded directly, and no additional deformation control is required. The welding may be performed automatically and with high efficiency.

The exemplary embodiments of the present disclosure have been described in detail with reference to drawings thereof. It should be understood by those skilled in the art that various changes in form and details may be made without departing from the scope of the present disclosure as defined by the appended claims.

## Claims

1. A method for manufacturing tower tube section, comprising:
forming a first tubular section (10) and a second tubular section (20);
joining the first tubular section and the second tubular section;
forming a first notch (11) on the first tubular section and a second notch (21) on the second tubular section, wherein an opening (30) is formed by the first notch and the second notch, wherein a height of the first notch is less than a height of the first tubular section, and a height of the second notch is less than a height of the second tubular section; and
forming a door frame (40), wherein the door frame is embedded in the opening and is welded to the first tubular section and the second tubular section, and providing a door opening (43) to the door frame, **characterised in that** the forming the door frame comprises:
forming a first tube (40a) by rolling a steel plate;
performing a re-rounding process on the first tube; and
cutting the first tube along a longitudinal direction of the first tube to form at least one door frame,
forming a joint section (42) on a periphery of a body of the door frame after the door frame is formed, wherein a thickness (t1) of the joint section is less than a thickness of the body of the door frame and is greater than a thickness (t2) of the first tubular section and the second tubular section.

2. The method according to claim 1, wherein the forming the door frame comprises:
forming two second tubes (40b) by respectively rolling two steel plates;
performing a re-rounding process on the two second tubes;
joining the two second tubes to form a third tube (40c); and
cutting the third tube along a longitudinal direction of the third tube to form at least one door frame.

3. The method according to claim 2, the forming the door frame further comprising:
forming a joint section (42) on a periphery of a body of the door frame after the door frame is formed, wherein a thickness (t1) of the joint section is less than a thickness (t2) of the body of the door frame and is greater than a thickness of the first tubular section and the second tubular section.

4. The method according to claim 1, wherein the door frame is a rectangular door frame or a trapezoid door frame; wherein the forming the door frame comprises:
forming a fillet transition between two adjacent edges of the door frame.

5. The method according to claim2, wherein the door frame is a rectangular door frame or a trapezoid door frame; wherein the forming the door frame comprises:
forming a fillet transition between two adjacent edges of the door frame.

6. The method according to claim 1, wherein in the process of forming the first tubular section and the second tubular section, the method further comprise:
forming the first tubular section and the second tubular section by rolling steel plates, and performing a re-rounding process on the first tubular section and the second tubular section.

7. A tower tube section, comprising:
a first tubular section (10); wherein the first tubular section comprise a first notch (11), and a height of the first notch is less than a height of the first tubular section;
a second tubular section (20), wherein the second tubular section is welded to the first tubular section, wherein the second tubular section comprises a second notch (21), and a height of the second notch is less than a height of the second tubular section, wherein an opening (11) is formed by the first notch and the second notch; and
a door frame (40), wherein the door frame is embedded in the opening and is welded to the first tubular section and the second tubular section, and a door opening (43) is provided to the door frame,
wherein the door frame comprises a body (41) of the door frame and a joint section (42) formed on an outer periphery of the body of the door frame; wherein a thickness (t1) of the joint section is less than a thickness of the body of the door frame, **characterised in that** a thickness (t1) of the joint section (42) is greater than a thickness (t2) of the first tubular section and the second tubular section..

8. The tower tube section according to claim 7, wherein a thickness of the door frame is greater than a thickness of the first tubular section and the second tubular section, and an outer side of the door frame (40) is protruded from an outer wall of the first tubular section and an outer wall of the second tubular section, and an inner side of the door frame is protruded from an inner wall of the first tubular section and an inner wall of the second tubular section.

9. The tower tube section according to claim 7, wherein the thickness of the joint section (42) is uniformly thinned along a circumferential direction of the tower tube section.

10. The tower tube section according to claim 7, wherein the door frame (40) is a one-piece structure.

11. The tower tube section according to claim 7, wherein the door frame is a rectangular door frame or a trapezoid door frame, and a fillet transition is formed between two adjacent edges of the door frame.

12. A wind turbine generator system, wherein the wind turbine generator system comprises the tower tube section according to claim 7.

## Patentansprüche

1. Verfahren zur Herstellung eines Turmrohrabschnitts, umfassend:
Bilden eines ersten rohrförmigen Abschnitts (10) und eines zweiten rohrförmigen Abschnitts (20);
Verbinden des ersten rohrförmigen Abschnitts und des zweiten rohrförmigen Abschnitts;
Bilden einer ersten Kerbe (11) auf dem ersten rohrförmigen Abschnitt und einer zweiten Kerbe (21) auf dem zweiten rohrförmigen Abschnitt, wobei eine Öffnung (30) durch die erste Kerbe und die zweite Kerbe gebildet wird, wobei eine Höhe der ersten Kerbe geringer ist als eine Höhe des ersten rohrförmigen Abschnitts, und eine Höhe der zweiten Kerbe geringer ist als eine Höhe des zweiten rohrförmigen Abschnitts; und
Bilden eines Türrahmens (40), wobei der Türrahmen in die Öffnung eingebettet ist und mit dem ersten rohrförmigen Abschnitt und dem zweiten rohrförmigen Abschnitt verschweißt ist, und Bereitstellen einer Türöffnung (43) an dem Türrahmen,
**dadurch gekennzeichnet, dass** das Bilden des Türrahmens Folgendes umfasst:
Bilden eines ersten Rohrs (40a) durch Walzen einer Stahlplatte:
Durchführen eines Runddrückprozesses an dem ersten Rohr; und
Schneiden des ersten Rohrs entlang einer Längsrichtung des ersten Rohrs, um mindestens einen Türrahmen zu bilden,
Bilden eines Verbindungsabschnitts (42) an einem Umfang eines Körpers des Türrahmens, nachdem der Türrahmen ausgebildet ist, wobei eine Dicke (t1) des Verbindungsabschnitts geringer ist als eine Dicke des Körpers des Türrahmens und größer ist als eine Dicke (t2) des ersten rohrförmigen Abschnitts und des zweiten rohrförmigen Abschnitts.

2. Verfahren nach Anspruch 1, wobei das Bilden des Türrahmens Folgendes umfasst:
Bilden von zwei zweiten Rohren (40b) durch jeweiliges Walzen von zwei Stahlplatten:
Durchführen eines Runddrückprozesses an den zwei zweiten Rohren;
Verbinden der zwei zweiten Rohre, um ein drittes Rohr (40c) zu bilden; und
Schneiden des dritten Rohrs entlang einer Längsrichtung des dritten Rohrs, um mindestens einen Türrahmen zu bilden.

3. Verfahren nach Anspruch 2, wobei das Bilden des Türrahmens weiter Folgendes umfasst:
Bilden eines Verbindungsabschnitts (42) an einem Umfang eines Körpers des Türrahmens, nachdem der Türrahmen ausgebildet ist, wobei eine Dicke (t1) des Verbindungsabschnitts geringer ist als eine Dicke des Körpers des Türrahmens und größer ist als eine Dicke (t2) des ersten rohrförmigen Abschnitts und des zweiten rohrförmigen Abschnitts.

4. Verfahren nach Anspruch 1, wobei der Türrahmen ein rechteckiger Türrahmen oder ein trapezförmiger Türrahmen ist; wobei das Bilden des Türrahmens Folgendes umfasst:
Bilden eines Ausrundungsübergangs zwischen zwei angrenzenden Kanten des Türrahmens.

5. Verfahren nach Anspruch 2, wobei der Türrahmen ein rechteckiger Türrahmen oder ein trapezförmiger Türrahmen ist; wobei das Bilden des Türrahmens Folgendes umfasst:
Bilden eines Ausrundungsübergangs zwischen zwei angrenzenden Kanten des Türrahmens.

6. Verfahren nach Anspruch 1, wobei im Prozess des Bildens des ersten rohrförmigen Abschnitts und des zweiten rohrförmigen Abschnitts das Verfahren weiter Folgendes umfasst:
Bilden des ersten rohrförmigen Abschnitts und des zweiten rohrförmigen Abschnitts durch Walzen von Stahlplatten, und Durchführen eines Runddrückprozesses an dem ersten rohrförmigen Abschnitt und dem zweiten rohrförmigen Abschnitt.

7. Turmrohrabschnitt, umfassend:
einen ersten rohrförmigen Abschnitt (10); wobei der erste rohrförmige Abschnitt eine erste Kerbe (11) umfasst und eine Höhe der ersten Kerbe geringer ist als eine Höhe des ersten rohrförmigen Abschnitts;
einen zweiten rohrförmigen Abschnitt (20), wobei der zweite rohrförmige Abschnitt mit dem ersten rohrförmigen Abschnitt verschweißt ist, wobei der zweite rohrförmige Abschnitt eine zweite Kerbe (21) umfasst und eine Höhe der zweiten Kerbe geringer ist als eine Höhe des zweiten rohrförmigen Abschnitts, wobei eine Öffnung (11) durch die erste Kerbe und die zweite Kerbe gebildet wird; und
einen Türrahmen (40), wobei der Türrahmen in die Öffnung eingebettet ist und mit dem ersten rohrförmigen Abschnitt und dem zweiten rohrförmigen Abschnitt verschweißt ist, und eine Türöffnung (43) an dem Türrahmen bereitgestellt ist, wobei der Türrahmen einen Körper (41) des Türrahmens und einen Verbindungsabschnitt (42) umfasst, der an einem Außenumfang des Körpers des Türrahmens ausgebildet ist; wobei eine Dicke (t1) des Verbindungsabschnitts geringer ist als eine Dicke des Körpers des Türrahmens, **dadurch gekennzeichnet, dass** eine Dicke (t1) des Verbindungsabschnitts (42) größer ist als eine Dicke (t2) des ersten rohrförmigen Abschnitts und des zweiten rohrförmigen Abschnitts.

8. Turmrohrabschnitt nach Anspruch 7, wobei eine Dicke des Türrahmens größer ist als eine Dicke des ersten rohrförmigen Abschnitts und des zweiten rohrförmigen Abschnitts, und eine Außenseite des Türrahmens (40) von einer Außenwand des ersten rohrförmigen Abschnitts und einer Außenwand des zweiten rohrförmigen Abschnitts hervorsteht, und eine Innenseite des Türrahmens von einer Innenwand des ersten rohrförmigen Abschnitts und einer Innenwand des zweiten rohrförmigen Abschnitts hervorsteht.

9. Turmrohrabschnitt nach Anspruch 7, wobei die Dicke des Verbindungsabschnitts (42) entlang einer Umfangsrichtung des Turmrohrabschnitts gleichmäßig verjüngt ist.

10. Turmrohrabschnitt nach Anspruch 7, wobei der Türrahmen (40) eine einstückige Struktur ist.

11. Turmrohrabschnitt nach Anspruch 7, wobei der Türrahmen ein rechteckiger Türrahmen oder ein trapezförmiger Türrahmen ist und ein Ausrundungsübergang zwischen zwei angrenzenden Kanten des Türrahmens ausgebildet ist.

12. Windturbinengeneratorsystem, wobei das Windturbinengeneratorsystem den Turmrohrabschnitt nach Anspruch 7 umfasst.

## Revendications

1. Procédé de fabrication de section de tube de tour, comprenant :
la formation d'une première section tubulaire (10) et d'une seconde section tubulaire (20) ;
la jonction de la première section tubulaire et de la seconde section tubulaire ;
la formation d'une première encoche (11) sur la première section tubulaire et d'une seconde encoche (21) sur la seconde section tubulaire, dans lequel une ouverture (30) est formée par la première encoche et la seconde encoche, dans lequel une hauteur de la première encoche est inférieure à une hauteur de la première section tubulaire, et une hauteur de la seconde encoche est inférieure à une hauteur de la seconde section tubulaire ; et
la formation d'un cadre de porte (40), dans lequel le cadre de porte est intégré dans l'ouverture et est soudé à la première section tubulaire et à la seconde section tubulaire, et la fourniture d'une ouverture de porte (43) au cadre de porte,
**caractérisé en ce que** la formation du cadre de porte comprend :
la formation d'un premier tube (40a) par le laminage d'une plaque en acier ;
la réalisation d'un processus de ré-arrondissage sur le premier tube ; et
la découpe du premier tube le long d'une direction longitudinale du premier tube pour former au moins un cadre de porte,
la formation d'une section de jonction (42) sur une périphérie d'un corps du cadre de porte après la formation du cadre de porte, dans lequel une épaisseur (t1) de la section de jonction est inférieure à une épaisseur du corps du cadre de porte et est supérieure à une épaisseur (t2) de la première section tubulaire et de la seconde section tubulaire.

2. Procédé selon la revendication 1, dans lequel la formation du cadre de porte comprend :
la formation de deux deuxièmes tubes (40b) par le laminage respectivement de deux plaques en acier ;
la réalisation d'un processus de ré-arrondissage sur les deux deuxièmes tubes ;
la jonction des deux deuxièmes tubes pour former un troisième tube (40c) ; et
la découpe du troisième tube le long d'une direction longitudinale du troisième tube pour former au moins un cadre de porte.

3. Procédé selon la revendication 2, la formation du cadre de porte comprenant en outre :
la formation d'une section de jonction (42) sur une périphérie d'un corps du cadre de porte après que le cadre de porte est formé, dans lequel une épaisseur (t1) de la section de jonction est inférieure à une épaisseur (t2) du corps du cadre de porte et est supérieure à une épaisseur de la première section tubulaire et de la seconde section tubulaire.

4. Procédé selon la revendication 1, dans lequel le cadre de porte est un cadre de porte rectangulaire ou un cadre de porte trapézoïdal ; dans lequel la formation du cadre de porte comprend :
la formation d'une transition incurvée entre deux bords adjacents du cadre de porte.

5. Procédé selon la revendication 2, dans lequel le cadre de porte est un cadre de porte rectangulaire ou un cadre de porte trapézoïdal ; dans lequel la formation du cadre de porte comprend :
la formation d'une transition incurvée entre deux bords adjacents du cadre de porte.

6. Procédé selon la revendication 1, dans lequel, dans le processus de formation de la première section tubulaire et de la seconde section tubulaire, le procédé comprend en outre :
la formation de la première section tubulaire et de la seconde section tubulaire par le laminage de plaques en acier et la réalisation d'un processus de ré-arrondissage sur la première section tubulaire et la seconde section tubulaire.

7. Section de tube de tour, comprenant :
une première section tubulaire (10) ;
dans laquelle la première section tubulaire comprend une première encoche (11), et une hauteur de la première encoche est inférieure à une hauteur de la première section tubulaire ;
une seconde section tubulaire (20) ;
dans laquelle la seconde section tubulaire est soudée à la première section tubulaire, dans laquelle la seconde section tubulaire comprend une seconde encoche (21), et une hauteur de la seconde encoche est inférieure à une hauteur de la seconde section tubulaire, dans laquelle une ouverture (11) est formée par la première encoche et la seconde encoche ; et
un cadre de porte (40), dans laquelle le cadre de porte est intégré dans l'ouverture et est soudé à la première section tubulaire et à la seconde section tubulaire, et une ouverture de porte (43) est fournie au cadre de porte,
dans laquelle le cadre de porte comprend un corps (41) du cadre de porte et une section de jonction (42) formée sur une périphérie extérieure du corps du cadre de porte ; dans laquelle une épaisseur (t1) de la section de jonction est inférieure à une épaisseur du corps du cadre de porte,
**caractérisée en ce qu'**une épaisseur (t1) de la section de jonction (42) est supérieure à une épaisseur (t2) de la première section tubulaire et de la seconde section tubulaire.

8. Section de tube de tour selon la revendication 7, dans laquelle une épaisseur du cadre de porte est supérieure à une épaisseur de la première section tubulaire et de la seconde section tubulaire, et un côté extérieur du cadre de porte (40) est saillant depuis une paroi extérieure de la première section tubulaire et une paroi extérieure de la seconde section tubulaire, et un côté intérieur du cadre de porte est saillant depuis une paroi intérieure de la première section tubulaire et une paroi intérieure de la seconde section tubulaire.

9. Section de tube de tour selon la revendication 7, dans laquelle l'épaisseur de la section de jonction (42) est amincie uniformément le long d'une direction circonférentielle de la section de tube de tour.

10. Section de tube de tour selon la revendication 7, dans laquelle le cadre de porte (40) est une structure d'un seul tenant.

11. Section de tube de tour selon la revendication 7, dans laquelle le cadre de porte est un cadre de porte rectangulaire ou un cadre de porte trapézoïdal, et une transition incurvée est formée entre deux bords adjacents du cadre de porte.

12. Système de générateur d'éolienne, dans lequel le système de générateur d'éolienne comprend la section de tube de tour selon la revendication 7.
